# EUROPÄISCHE PATENTSCHRIFT

(11) **EP 3 260 662 B1**
(45) Veröffentlichungstag und Bekanntmachung des Hinweises auf die Patenterteilung: **13.11.2019**
(21) Anmeldenummer: 17176088.7
(22) Anmeldetag: 14.06.2017
(51) Int. Cl.: F01D 5/30, F01D 17/16, F04D 29/56, F16C 33/16, F16C 33/04, F16C 33/10, F16C 33/12

(54) **LAGERELEMENT UND TURBOMASCHINE MIT EINEM LAGERELEMENT**
BEARING ELEMENT AND TURBO ENGINE WITH A BEARING ELEMENT
ÉLÉMENT DE PALIER ET TURBOMACHINE LE COMPRENANT

(30) Priorität: 20.06.2016 DE 102016210981
(43) Veröffentlichungstag der Anmeldung: 27.12.2017
(73) Patentinhaber: Rolls-Royce Deutschland Ltd & Co KG, 15827 Blankenfelde-Mahlow (DE)
(72) Erfinder: DR. SCHRÜFER, Susanne, 15827 Blankenfelde-Mahlow (DE); SCHREIBER, Karl, 15827 Blankenfelde-Mahlow (DE); ULRICHSOHN, Björn, 15827 Blankenfelde-Mahlow (DE)
(74) Vertreter: Maikowski & Ninnemann Patentanwälte Partnerschaft mbB

(56) Entgegenhaltungen:
- US-A1- 2002 154 991
- US-A1- 2007 160 464

## Beschreibung

Die Erfindung betrifft eine Turbomaschine mit einem Lagerelement und mindestens einer verstellbaren Leitschaufel mit den Merkmalen des Anspruchs 1.

Verstellbare Leitschaufeln werden in Turbomaschinen, insbesondere in Verdichtern von Flugzeugtriebwerken eingesetzt, um eine optimale Anpassung an die Strömungsbedingungen zu gewährleisten. Dabei werden Lagerbuchsen auf Polyimidbasis verwendet, die bei mechanischer Belastung über einer für den Verdichter relativ geringen Einsatztemperatur sprunghaft einem hohen Verschleiß unterliegen, oder Lagerbuchsen auf der Basis von gesintertem Graphit-Metall Material verwendet, wie aus der US 2007/0160464 bekannt.

Es besteht daher die Aufgabe, Lagerungen zur Verfügung zu stellen, die insbesondere bei höheren Verdichtertemperaturen noch verschließfest sind, und einen geringen Reibkoeffizienten aufweisen.

Diese Aufgabe wird durch eine Turbomaschine mit den Merkmalen des Anspruchs 1 gelöst. Durch die Verwendung einer porösen Matrix aus Kohlenstoff und / oder Graphit und mindestens einer metallischen Phase oder eines Metallsalzes, die mindestens teilweise in Poren der Matrix angeordnet ist, kann insbesondere eine temperaturfeste Lagerung für die verstellbaren Leitschaufeln geschaffen werden. Es wird somit ein metall-infiltriertes (mit Metall oder Metallsalz) Kohlenstoff- und / oder Graphit Material verwendet.

Dabei kann in einer Ausführungsform das Lagerelement nur aus der porösen Matrix aus Kohlenstoff und / oder Graphit und der mindestens einen metallischen Phase oder dem Metallsalz bestehen. Das Lagerelement wäre in diesem Fall einstückig aus dem metall-infiltrierten Material ausgebildet.

In einer weiteren Ausbildung des Lagerelementes ist eine beschichtungsfreie Kontaktfläche für die mindestens eine verstellbare Leitschaufel vorgesehen. Dies bedeutet, dass eine Aufnahme für ein Wellenende der verstellbaren Leitschaufel nicht gesondert beschichtet werden muss. In einer weiteren Ausführungsform ist die Kontaktfläche selbstschmierend ausgebildet.

Das Lagerelement kann in einer Ausführungsform als inneres Deckband (shroud) für einen Schaufelkranz ausgebildet sein oder mit dem inneren Deckband verbunden sein.

Zusätzlich zu den Lagerungseigenschaften für die mindestens eine verstellbare Leitschaufel kann das Lagerelement noch weitere Eigenschaften aufweisen. So kann es z.B. auch eine Einlauffläche für eine Dichtung, insbesondere eine Dichtung mit Dichtlippen oder eine Labyrinthdichtung aufweisen. Auf diese Weise können die Materialeigenschaften des Lagerelements gezielt für zwei unterschiedliche Einsatzzwecke verwendet werden, nämlich die Lagerung der verstellbaren Leitschaufeln und die Bildung einer Dichtung. Dabei kann die Kontaktfläche für die Lagerung der mindestens einen Leitschaufel und die Einlauffläche für eine Dichtung an im Wesentlichen gegenüberliegenden Seiten des Lagerelements angeordnet sein.

In einer anderen Ausführungsform des Lagerelementes kann die metallische Phase ein Nichteisenmetall, insbesondere Kupfer, Silber oder Antimon oder ein Leichtmetall, insbesondere Aluminium, nicht-wärmebehandeltes Aluminium oder Magnesium oder eine Legierung dieser Materialien aufweisen. Als Metallsalz kann z.B. ein Metallphosphat, insbesondere Aluminiumphosphat verwendet werden.

In einer weiteren Ausführungsform kann die Matrix aus Kohlenstoff und / oder Graphit mindestens in einem Teilbereich eine offen-poröse, zusammenhängende Struktur aufweisen.

Zur Verringerung thermischer Spannungen ist bei einer Ausführungsform das Verhältnis der thermischen Ausdehnungskoeffizienten der Matrix und der mindestens einen metallischen Phase kleiner als 0,6.

Es ist nicht zwingend, dass die metallische Phase oder das Metallsalz in der Matrix homogen verteilt ist. Es ist möglich, dass einer Ausführungsform die metallische Phase oder das Metallsalz belastungsgerecht, insbesondere inhomogen im Lagerelement verteilt ist. So kann der Anteil der metallischen Phase in hochbelasteten Bereichen des Lagerelements höher sein. Grundsätzlich erlaubt ein höherer Graphit/Kohlenstoffanteil eine Reibungsminimierung, ein höherer Infiltrationsgrad eine Festigkeitssteigerung. Der jeweils an die Belastung angepasste, optimale Wert kann so eingestellt werden.

In einerweiteren Ausführungsform ist das Lagerelement als Ringabschnitt oder Vollring mit Lagerungen für Wellenenden der verstellbaren Leitschaufel ausgebildet.

Die Aufgabe wird auch durch ein Lagerelement gelöst, dass durch einen Flüssiginfiltrationsprozess herstellbar ist, insbesondere einem spontanen oder einem forcierten Flüssiginfiltrationsprozess.

Die Aufgabe wird auch durch ein Verfahren zur Herstellung eines Lagerelementes gelöst, bei dem
a) eine Matrix aus Kohlenstoff und / oder Graphit in einer Infiltrationsvorrichtung angeordnet wird und
b) eine flüssige Phase mit einem Metall oder einem Metallsalz in die Matrix verbracht wird, insbesondere unter Aufbringung eines externen Drucks oder einer externen Kraft.

Die Aufgabe wird auch durch eine Turbomaschine, insbesondere ein Flugzeugtriebwerk gemäß Anspruch 15 gelöst.

In Zusammenhang mit den in den Figuren dargestellten Ausführungsbeispielen wird die Erfindung erläutert. Dabei zeigt
- Fig. 1: eine schematische Seitenansicht einer Ausführungsform eines Lagerelementes einer verstellbaren Leitschaufel in einem Verdichter;
- Fig. 2: eine schematische Darstellung eines Materials mit metall-infiltriertem Graphit;
- Fig. 3: eine schematische Darstellung einer Ausführungsform eines Lagerelementes;
- Fig. 4: eine schematische Darstellung einer weiteren Ausführungsform eines Lagerelementes;
- Fig. 5: eine perspektivische Ansicht eines Lagerelements als Vollring zur Aufnahme von verstellbaren Leitschaufeln;
- Fig. 6: eine perspektivische Ansicht einer verstellbaren Leitschaufelreihe in einem Lagerelement.

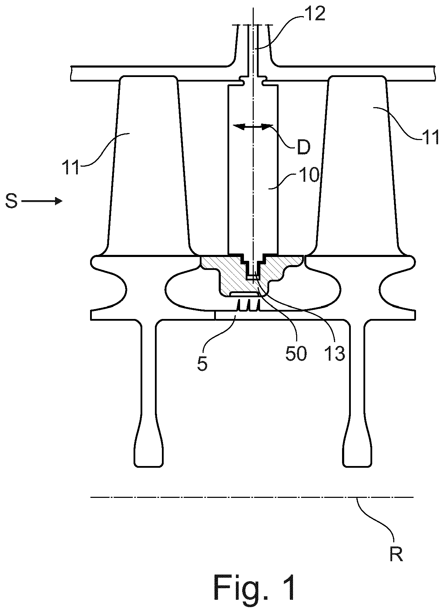

In Fig. 1 ist ein Ausschnitt durch eine Beschauflung einer Turbomaschine, nämlich eines Verdichters eines Flugzeugtriebwerks dargestellt. Der Ausschnitt zeigt eine verstellbare Leitschaufel 10 (VSV, *variable stator vane*), bei der stromauf und stromab jeweils eine Rotorschaufel 11 angeordnet ist. Die Strömungsrichtung S durch den Verdichter ist durch einen Pfeil dargestellt. Der Verdichter dreht sich um eine Rotationsachse R.

Die verstellbare Leitschaufel 10 kann je nach geforderter Einstellung in an sich bekannter Weise um ihre Längsachse gedreht werden (Doppelpfeil D). Am radial äußeren Ende der Leitschaufel 10 (d.h. gehäuseseitig) ist eine hier nicht im Detail dargestellte Verstellvorrichtung der Leitschaufel 10 angeordnet. Die Verstellvorrichtung greift dabei an ein äußeres Wellenende 12 der Leitschaufel 10 an. Die Ansteuerung zur Verstellung erfolgt dabei z.B. durch die Kraftstoffregelung, d.h. durch die vom Piloten festgelegte Schubhebelstellung, und ggf. in Abhängigkeit von Sensordaten, wie z.B. Temperaturdaten oder Drehzahldaten.

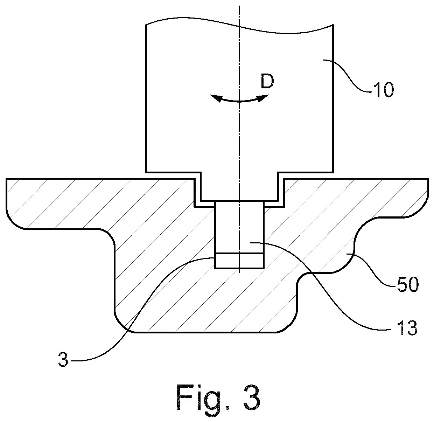

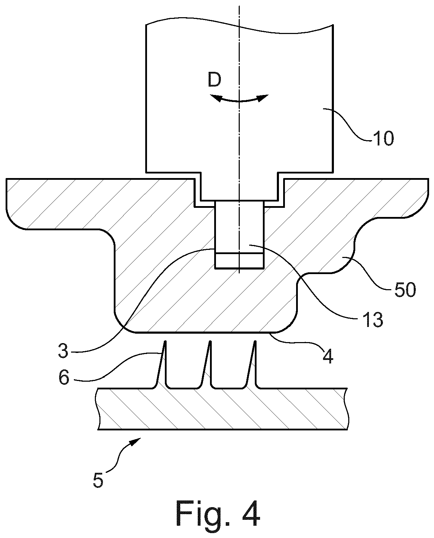

Ein radial innenliegendes (d.h. nabenseitiges) Wellenende 13 ist in einem Lagerelement 50 mit einem Material aus metall- oder metallsalz-infiltrierten Graphit 1, 2 gelagert, dessen Ausführungsformen im Folgenden (siehe insbesondere Fig. 3 und 4) dargestellt werden.

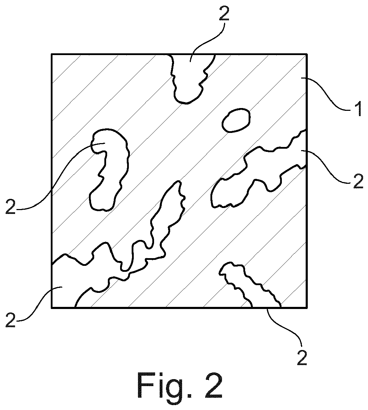

Fig. 2 zeigt eine Schnittansicht durch ein graphit-infiltriertes Material, das im Lagerelement 50 verwendet wird. Dabei ist in eine Matrix 1 aus Graphit eine Phase aus einem Metall oder Metallsalz 2 eingelagert. Die metallische Phase 2 (hier nicht wärmebehandeltes Aluminium) ist in der dargestellten Ausführungsform in einer offen-porigen und/oder einer verzweigten Struktur im Material ausgebildet. Die dreidimensionale verzweigte Struktur ist hier nur im Schnitt dargestellt. Metall-infiltriertes Graphit (mit Metall oder Metallsalz) ist ein Verbundwerkstoff, der die Eigenschaften der verwendeten Materialien miteinander kombiniert bzw. verbessert die Eigenschaften des Matrixwerkstoffes.

Diese Ausführungsform (und auch die anderen) sind mit einem Flüssiginfiltrationsprozess herstellbar.

Bei spontaner Flüssiginfiltration wird z.B. das flüssige Metall 2 in die Poren der Matrix 1 gefüllt, ohne das äußerer Druck aufgewandt wird. Dies kann z.B. mit Hilfe einer kontrollierten Temperatur und Gasatmosphäre durchgeführt werden.

Bei einer forcierten Flüssiginfiltration wird eine äußere Triebkraft verwendet, um z.B. das flüssige Metall 2 in die Matrix 1 zu pressen. Dies kann z.B. durch Aufbringen eines erhöhten Gasdrucks in einer Kammer erfolgen, in der die Matrix gelagert ist. So kann z.B. auf einer Seite der Matrix 1 Unterdruck angelegt werden, auf der Seite mit dem geschmolzenen Metall 2 ein Überdruck.

Der Druck kann aber auch z.B. durch eine mechanische Vorrichtung aufgebracht werden, in der die flüssige Phase z.B. mit einem Kolben in die Matrix 2 gepresst wird.

Eine weitere Möglichkeit der forcierten Flüssigkeitsinfiltration ist das Einbringen der flüssigen Phase unter Zentrifugalkraft. Da die flüssige metallische Phase 2 leitfähig ist, können auch elektromechanische Kräfte ausgenutzt werden, um die metallische Phase 2 in die Matrix zu bringen (Lorentz-Infiltration). Auch kann Ultraschall dazu verwendet werden, gezielt Kaviationsblasen in der Matrix zu erzeugen. Nach dem Kollabieren der Blasen, wird das flüssige Metall 2 durch Schockwellen in die Matrix 1 hineingetrieben.

Das Material der Lagerelemente 50, das durch eine der hier angegebenen Infiltrationsprozesse hergestellt wird, unterscheidet sich um Gefüge deutlich von gesinterten Materialien.

Durch Einlagerung z.B. von Leichtmetallen wie Aluminium oder Magnesium in das Porensystem des Graphitwerkstoffs als Matrix 1 gelingt es zum einen, die Dichte des Lagerelementes 50 auf einem niedrigen Niveau zu halten. Zum anderen gelingt es durch geeignete Wahl der verwendeten Rohmaterialien, sowie deren Verarbeitungsbedingungen, die Eigenschaften des hergestellten Verbundmaterials gezielt zu beeinflussen. So kann die Festigkeit von Graphit beispielsweise durch die Infiltration mit Aluminium um 100% erhöht werden. Bei der Infiltration mit Aluminium trifft dies vor allem für die Wärmeleitfähigkeit, die Wärmedehnung, sowie die mechanischen Materialcharakteristika zu.

Als Material für die metallische Phase 2 kommen vor allem Leichtmetalle, wie Aluminium oder Magnesium in Frage. Grundsätzlich können aber Nichteisenmetalle, wie Kupfer, Silber oder Antimon verwendet werden. Auch können Nichteisenmetalllegierungen verwendet werden. Auch kann ein Metallsalz, wie z.B. ein Metallphosphat verwendet werden. Ein Lagerelement 50 mit oder aus metall-infiltriertem Graphit weist selbstschmierende Eigenschaften auf und kann bei Temperaturen bis ca. 450° C verwendet werden.

In der hier dargestellten Ausführungsform besteht das Lagerelement 50 vollständig aus dem metall-infiltrierten Material. In anderen Ausführungsformen ist nur ein Bereich des Lagerelementes 50 aus diesem Material gebildet. Auch ist es nicht zwingend, dass die metallische Phase 2 sich im Mittel homogen über das Lagerelement 50 verteilt. Es ist z.B. möglich, dass die unmittelbaren Bereiche um das innere Wellenende 13 anders ausgebildet sind, als andere Bereiche des Lagerelementes 50. Dies kann bei der Infiltration der Matrix 1 mit der metallischen Phase 2 oder dem Metallsalz gezielt gesteuert werden, so das z.B. eine belastungsgerechte Verteilung des metallischen Phase 2 oder des Metallsalzes in der Matrix 1 erreicht wird. Dies bedingt dann eine inhomogene Verteilung der metallischen Phase 2 oder des Metallsalzes über das ganze Lagerelement 50 gesehen.

In Fig. 3 ist in schematischer Weise eine Schnittansicht durch ein Lagerelement 50 aus metall-infiltrierten Graphit für eine verstellbare Leitschaufel 10 dargestellt, d.h. ein Detail aus der Fig. 1. Das radial innere, d.h. das nabenseitige Wellenende 13 wird dabei unmittelbar in dem Lagerelement 50 geführt, d.h. eine Beschichtung des Lagerelementes 50 oder eine eingesetzte Buchse ist aufgrund der Eigenschaften der metall-infiltrierten Lagerung gerade nicht notwendig. Somit besteht an der Kontaktfläche 3 ein unmittelbarer Kontakt zwischen dem Material der verstellbaren Leitschaufel 10 und dem Lagerelement 50. Das Lagerelement 50 stellt somit eine Gleitlagerfunktion bereit.

In Fig. 4 ist eine weitere Ausführungsform eines Lagerelements 50 dargestellt, bei der die Lagerung der verstellbaren Leitschaufel 10 analog zur Ausführungsform gemäß Fig. 3 ausgeführt ist, so dass Bezug auf die Beschreibung genommen werden kann.

An der radial inneren Seite des Lagerelements 50 in Fig. 4 ist eine Einlauffläche 4 für eine Dichtung 5 mit Dichtlippen 6 angeordnet. Die Dichtung 5 nutzt dabei auch die vorteilhaften selbstschmierenden Eigenschaften des metall-infiltrierten Graphits.

In den Fig. 1, 3 und 4 waren jeweils Ausführungsformen des Lagerelementes 50 in Schnittansichten dargestellt.

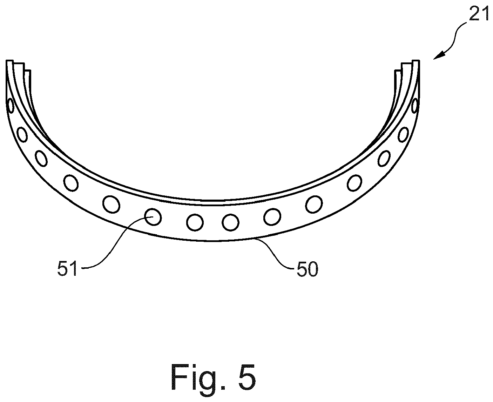

In Fig. 5 ist eine perspektivische Ansicht eines Lagerelementes 50 dargestellt, das hier als inneres Deckband 21 (*shroud*) für eine Stufe von hier nicht dargestellten Leitschaufeln 10 dient. Das Lagerelement 50 weist eine Vielzahl von Aufnahmen 51 auf, in denen die Kontaktfläche 3 für die radial inneren Wellenenden 13 der verstellbaren Leitschaufeln 10 angeordnet werden können.

Das Lagerelement 50 ist hier als Halbring ausgebildet. Alternativ kann das Lagerelement 50 auch als Vollring oder Ringabschnitt ausgebildet sein. Diese Lagerelemente 50 können dann um die Nabe des Verdichters herum angeordnet werden.

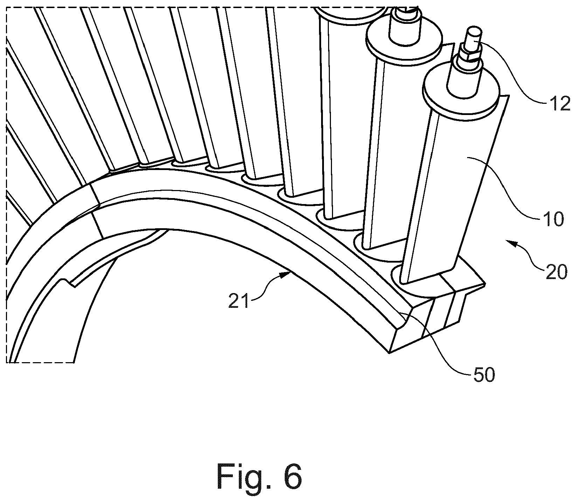

In Fig. 6 ist in einem perspektivischen Ausschnitt ein Lagerelement 50 als inneres Deckband 21 dargestellt. Das innere Deckband 21 ist hier aus zwei Ringabschnitten zusammengesetzt. In dem Lagerelement 50 sind Öffnungen für die Vielzahl der verstellbaren Leitschaufeln 10 angeordnet, die den Schaufelkranz 20 bilden.

### Bezugszeichenliste

- 1: Matrix aus Kohlenstoff
- 2: metallische Phase / Metallsalz
- 3: Kontaktfläche
- 4: Einlauffläche
- 5: Dichtung
- 6: Dichtlippen

- 10: verstellbare Leitschaufel
- 11: Rotorschaufel
- 12: radial äußeres Wellenende der verstellbaren Leitschaufel
- 13: radial inneres Wellenende der verstellbaren Leitschaufel

- 20: Schaufelkranz
- 21: inneres Deckband (shroud)

- 50: Lagerelement
- 51: Aufnahmen für Wellenende der verstellbaren Leitschaufeln

- D: Drehung der verstellbaren Leitschaufel
- R: Drehachse der Turbomaschine
- S: Strömungsrichtung

## Patentansprüche

1. Turbomaschine, insbesondere einem Flugzeugtriebwerk, mit einem Lagerelement und mindestens einer verstellbaren Leitschaufel
**dadurch gekennzeichnet, dass**
das Lagerelement (50) eine poröse Matrix (1) aus Kohlenstoff und / oder Graphit und mindestens einer metallischen Phase (2) oder einem Metallsalz, die mindestens teilweise in Poren der Matrix (1) angeordnet ist, aufweist, so dass ein metall-infiltriertes oder ein metallsalzinfiltriertes Material vorliegt.

2. Turbomaschine nach Anspruch 1, **dadurch gekennzeichnet, dass** das Lagerelement (50) nur aus der porösen Matrix (1) aus Kohlenstoff und / oder Graphit und der mindestens einen metallischen Phase (2) oder dem Metallsalz besteht.

3. Turbomaschine nach Anspruch 1 oder 2, **dadurch gekennzeichnet, dass** eine Kontaktfläche (3) der mindestens einen verstellbaren Leitschaufel (10) weder eine Beschichtung noch eine eingepasste Buchse aufweist.

4. Turbomaschine nach Anspruch 3, **dadurch gekennzeichnet, dass** die Kontaktfläche (3) selbstschmierend ausgebildet ist.

5. Turbomaschine nach mindestens einem der vorhergehenden Ansprüche, **dadurch gekennzeichnet, dass** das Lagerelement (50) als inneres Deckband (21) eines Schaufelkranzes (20) ausgebildet ist oder mit dem inneren Deckband (21) verbunden ist.

6. Turbomaschine nach mindestens einem der vorhergehenden Ansprüche, **dadurch gekennzeichnet, dass** das Lagerelement (50) eine Einlauffläche (4) einer Dichtung (5), insbesondere eine Dichtung (5) mit Dichtlippen (6) oder eine Labyrinthdichtung aufweist.

7. Turbomaschine nach Anspruch 3 und 6, **dadurch gekennzeichnet, dass** die Kontaktfläche (3) für die mindestens eine Leitschaufel (3) und die Einlauffläche (4) für eine Dichtung (5) an im Wesentlichen gegenüberliegenden Seiten des Lagerelements (50) angeordnet sind.

8. Turbomaschine nach mindestens einem der vorhergehenden Ansprüche, **dadurch gekennzeichnet, dass** die mindestens eine metallische Phase (2) ein Nichteisenmetall, insbesondere Kupfer, Silber oder Antimon oder ein Leichtmetall, insbesondere Aluminium, nicht-wärmebehandeltes Aluminium oder Magnesium oder ein Metallsalz, insbesondere ein Metallphosphat aufweist oder eine Legierung dieser Materialien aufweist.

9. Turbomaschine nach mindestens einem der vorhergehenden Ansprüche, **dadurch gekennzeichnet, dass** die Matrix (1) aus Kohlenstoff und / oder Graphit mindestens in einem Teilbereich eine geschlossene Porenstruktur oder eine offen-poröse, zusammenhängende Struktur aufweist.

10. Turbomaschine nach mindestens einem der vorhergehenden Ansprüche, **dadurch gekennzeichnet, dass** das Verhältnis der thermischen Ausdehnungskoeffizienten der Matrix (1) und der mindestens einen metallischen Phase (2) kleiner als 0,6 ist.

11. Turbomaschine nach mindestens einem der vorhergehenden Ansprüche, **dadurch gekennzeichnet, dass** die metallische Phase (2) oder das Metallsalz in der Matrix (1) belastungsgerecht, insbesondere inhomogen im Lagerelement (50) verteilt ist.

12. Turbomaschine nach mindestens einem der vorhergehenden Ansprüche, **dadurch gekennzeichnet, dass** es als Ringabschnitt oder Vollring mit Lagerungen für Wellenenden (13) der verstellbaren Leitschaufel (10) ausgebildet ist.

13. Turbomaschine nach mindestens einem der Ansprüche 1 bis 12, herstellbar durch einen Flüssiginfiltrationsprozess, insbesondere einem spontanen oder einem forcierten Flüssiginfiltrationsprozess.

14. Verfahren zur Herstellung eines Lagerelementes in einer Turbomaschine nach mindestens einem der Ansprüche 1 bis 13.
**dadurch gekennzeichnet, dass**
a) eine Matrix (1) aus Kohlenstoff und / oder Graphit in einer Infiltrationsvorrichtung angeordnet wird und
b) eine flüssige Phase (2) mit einem Metall oder einem Metallsalz in die Matrix verbracht wird, insbesondere unter Aufbringung eines externen Drucks oder einer externen Kraft.

## Claims

1. Turbo machine, in particular an aircraft engine, having a bearing element and at least one adjustable guide vane, **characterized in that** the bearing element (50) has a porous matrix (1) from carbon and/or graphite and from at least one metallic phase (2) or a metallic salt which at least in part is disposed in pores of the matrix (1) such that a metal-infiltrated or a metallic-salt-infiltrated material is present.

2. Turbo machine according to Claim 1, **characterized in that** the bearing element (50) is composed only of the porous matrix (1) from carbon and/or graphite, and of the at least one metallic phase (2) or the metallic salt.

3. Turbo machine according to Claim 1 or 2, **characterized in that** a contact face (3) of the at least one adjustable guide vane (10) has neither a coating nor a fitted bushing.

4. Turbo machine according to Claim 3, **characterized in that** the contact face (3) is configured so as to be self-lubricating.

5. Turbo machine according to at least one of the preceding claims, **characterized in that** the bearing element (50) is configured as an inner shrouding (21) of a blade ring (20) or is connected to the inner shrouding (21).

6. Turbo machine according to at least one of the preceding claims, **characterized in that** the bearing element (50) has a run-in face (4) of a seal (5), in particular a seal (5) having seal lips (6) or a labyrinth seal.

7. Turbo machine according to Claim 3 and 6, **characterized in that** the contact face (3) for the at least one guide vane (3) and the run-in face (4) for a seal (5) are disposed on substantially opposite sides of the bearing element (50).

8. Turbo machine according to at least one of the preceding claims, **characterized in that** the at least one metallic phase (2) comprises a non-ferrous metal, in particular copper, silver or antimony, or a light metal, in particular aluminium, non-heat-treated aluminium or magnesium, or a metallic salt, in particular a metallic phosphate, or comprises an alloy of said materials.

9. Turbo machine according to at least one of the preceding claims, **characterized in that** the matrix (1) from carbon and/or graphite at least in a subregion has a closed pore structure or an open-porous contiguous structure.

10. Turbo machine according to at least one of the preceding claims, **characterized in that** the ratio of the thermal coefficients of expansion of the matrix (1) and of the at least one metallic phase (2) is less than 0.6.

11. Turbo machine according to at least one of the preceding claims, **characterized in that** the metallic phase (2) or the metallic salt in the matrix (1) is distributed in a load-appropriate, in particular inhomogeneous, manner in the bearing element (50).

12. Turbo machine according to at least one of the preceding claims, **characterized in that** it is configured as a ring portion or a complete ring having mountings for shaft ends (13) of the adjustable guide vane (10).

13. Turbo machine according to at least one of Claims 1 to 12, obtained by a liquid infiltration process, in particular a spontaneous or a forced liquid infiltration process.

14. Method for producing a bearing element in a turbo machine according to at least one of Claims 1 to 13,
**characterized in that**
a) a matrix (1) from carbon and/or graphite is disposed in an infiltration device and
b) a liquid phase (2) having a metal or a metallic salt is introduced into the matrix, in particular while applying an external pressure or an external force.

## Revendications

1. Turbomachine, en particulier un moteur d'aéronef, comprenant un élément formant palier et au moins une aube directrice positionnable,
**caractérisée en ce que**
l'élément formant palier (50) possède une matrice poreuse (1) en carbone et/ou en graphite et au moins une phase métallique (2) ou un sel métallique qui est disposée au moins partiellement dans les pores de la matrice (1), de manière à disposer d'un matériau infiltré de métal ou infiltré de sel métallique.

2. Turbomachine selon la revendication 1, **caractérisée en ce que** l'élément formant palier (50) se compose uniquement de la matrice poreuse (1) en carbone et/ou en graphite et de l'au moins une phase métallique (2) ou du sel métallique.

3. Turbomachine selon la revendication 1 ou 2, **caractérisée en ce qu'**une surface de contact (3) de l'au moins une aube directrice (10) positionnable ne possède ni un revêtement, ni une douille adaptée.

4. Turbomachine selon la revendication 3, **caractérisée en ce que** la surface de contact (3) est réalisée de manière autolubrifiante.

5. Turbomachine selon au moins l'une des revendications précédentes, **caractérisée en ce que** l'élément formant palier (50) est réalisé sous la forme d'une bande de renforcement (21) interne d'une couronne d'aubes (20) ou est relié à la bande de renforcement (21) interne.

6. Turbomachine selon au moins l'une des revendications précédentes, **caractérisée en ce que** l'élément formant palier (50) possède une surface d'entrée (4) d'une étanchéité (5), notamment une étanchéité (5) munie de lèvres d'étanchéité (6) ou une étanchéité en labyrinthe.

7. Turbomachine selon les revendications 3 et 6, **caractérisée en ce que** la surface de contact (3) pour l'au moins une aube directrice (3) et la surface d'entrée (4) pour une étanchéité (5) sont disposées au niveau des côtés sensiblement opposés de l'élément formant palier (50) .

8. Turbomachine selon au moins l'une des revendications précédentes, **caractérisée en ce que** l'au moins une phase métallique (2) possède un métal non ferreux, notamment du cuivre, de l'argent ou de l'antimoine ou un métal léger, notamment de l'aluminium, de l'aluminium non traité thermiquement ou du magnésium, ou un sel métallique, notamment un phosphate métallique, ou encore un alliage de ces matériaux.

9. Turbomachine selon au moins l'une des revendications précédentes, **caractérisée en ce que** la matrice (1) en carbone et/ou en graphite possède au moins dans une zone partielle une structure à pores fermés ou une structure cohérente poreuse ouverte.

10. Turbomachine selon au moins l'une des revendications précédentes, **caractérisée en ce que** le rapport entre les coefficients de dilatation thermique de la matrice (1) et de l'au moins une phase métallique (2) est inférieur à 0,6.

11. Turbomachine selon au moins l'une des revendications précédentes, **caractérisée en ce que** la phase métallique (2) ou le sel métallique dans la matrice (1) est distribué en fonction de la charge, notamment de manière inhomogène dans l'élément formant palier (50).

12. Turbomachine selon au moins l'une des revendications précédentes, **caractérisée en ce qu'**elle est réalisée sous la forme d'une portion d'anneau ou d'un anneau complet avec des paliers pour les extrémités d'arbre (13) de l'aube directrice (10) positionnable.

13. Turbomachine selon au moins l'une des revendications 1 à 12, pouvant être fabriquée par un processus d'infiltration de liquide, notamment un processus d'infiltration de liquide spontané ou forcé.

14. Procédé de fabrication d'un élément formant palier dans une turbomachine selon au moins l'une des revendications 1 à 13,
**caractérisé en ce que**
a) une matrice (1) en carbone et/ou en graphite est disposée dans un dispositif d'infiltration et
b) une phase liquide (2) comprenant un métal ou un sel métallique est amenée dans la matrice, notamment avec application d'une pression externe ou d'une force externe.
